# EUROPEAN PATENT APPLICATION

(11) **EP 4 603 729 A2**
(43) Date of publication of application: **20.08.2025**
(21) Application number: 25167233.3
(22) Date of filing: 21.04.2022
(51) Int. Cl.: F16J 15/34, F16J 15/48, F16J 15/16, F16J 15/44, F16J 15/00

(54) **SEALING ELEMENT ASSEMBLY FOR SHAFT SEAL**

(30) Priority: 21.04.2021 EP 21169698
(62) Divisional of application: 22724052.0
(71) Applicant: Sealway AB, 239 34 Skanör (SE)
(72) Inventor: CHRISTENSEN, Håkan, 239 34 SKANÖR (SE)
(74) Representative: KIPA AB

(57) **Abstract**

A sealing element assembly (1) for a single type mechanical shaft seal assembly (2) is adapted to be arranged between the circumference of a rotatable shaft (3) and a static housing (4) surrounding the shaft (3). A first side (5) in an axial direction of the sealing element assembly (1) is adapted to face an enclosed space (6) between the housing (4) and the shaft (3) and the opposite second side (7) of the sealing element assembly (1) is adapted to face an ambient space (8), wherein the sealing element assembly (1) is adapted to be at least partly moveably arranged in an axial direction from a non-sealing position to a sealing position. The sealing element assembly (1) in the non-sealing position is adapted to be arranged at distance from a surface (10) of a plane that is transversal or tapered up to ±5 degrees to an axis of the shaft (3). The sealing position of the sealing element assembly (1) is arranged to seal against said surface (10) such that the sealing element assembly (1) constitutes a sealing between the rotatable shaft (3) and the housing (4) when the enclosed space (6) is pressurized.

## Description

### TECHNICAL FIELD

The present invention relates to a sealing element assembly for a single type mechanical shaft seal assembly and a method for cleaning a single type mechanical shaft seal assembly. The sealing element assembly is adapted to be arranged between the circumference of a rotatable shaft and a static housing surrounding the shaft.

### BACKGROUND

When mechanical shaft seal assemblies are used in for instance pumps in the food industry, hygiene is of utter importance. One side of the seal is considered the product side and the other the non-product side. The pressure on the product side is generally higher than on the non-product side. Since a seal in this context is never 100% sealing there is a smaller leakage of product to the non-product side.

One risk scenario is that product passes through the lubricating film between the seal faces to the non-product side and microorganisms start growing in the residues. Microbial contamination of the product could occur if the microorganisms move back through the lubricating film.

One common way to avoid the growth of microorganisms on the non-product side is to have a continuous flow of water rinsing the non-product side. However, a huge amount of water is required over time and an additional dynamic sealing device, in the shape of a second mechanical seal or a type of lip seal, is required preventing the water from leaking to the ambient surrounding

A further alternative is to disassemble the seal in order to gain access to the non-product side space in a sealing assembly and in this disassembled state clean the seal. This is laborious work and time consuming.

Thus, there is a need for a more cost-efficient way to comply with the cleanability requirements.

### SUMMARY

It is an object of the present invention to provide a device and method for improving the cleanability of a single seal assembly. Accordingly, embodiments of the present invention preferably seek to mitigate, alleviate or eliminate the issues in the art, such as the above-identified, by providing a device and a method in accordance with the appended patent claims.

The invention refers to any type of established sealing of the atmospheric-, outboard-, internal, non-product exposed parts of mechanical shaft seals of the single type with the purpose of rinsing, cleaning, purging, sterilizing, sanitizing or any other similar processes by the usage of intermittently sealing element assemblies fitted in the mechanical housing or integral with the equipment to be sealed (pump, mixer, other) or onto the shaft activated by the pressure of the rinse-, cleaning-, purging- , sterilizing- or sanitizing fluids (gaseous or liquid) during stand still (non-rotation) of the shaft. The intermittently sealing element assemblies utilize a double modus function in that they are not sealing during rotation of the shaft ("non-sealing modus") and are only sealing during stand still of the shaft and when pressure is applied onto the sealing element assembly, i.e., "active sealing modus". When the pressure is released, the sealing element assembly returns to an idle position or "non sealing modus" as the gap between the sealing element assembly and its counter face is re-established, and the shaft may rotate freely again.

According to a first aspect of the present disclosure, a sealing element assembly for a single type mechanical shaft seal assembly is provided. The sealing element assembly is adapted to be arranged between the circumference of a rotatable shaft and a static housing surrounding the shaft. A first side in an axial direction of the sealing element assembly is adapted to face an enclosed space between the housing and the shaft and the opposite second side of the sealing element assembly is adapted to face an ambient space. The sealing element assembly is further adapted to be at least partly moveably arranged in an axial direction from a non-sealing position to a sealing position, wherein the sealing element assembly in the non-sealing position is adapted to be arranged at distance from a surface of a plane that is transversal or tapered up to ±5 degrees to an axis of the shaft, wherein in the sealing position, the sealing element assembly is arranged to seal against said surface such that the sealing element assembly constitutes a sealing between the rotatable shaft and the housing when the enclosed space is pressurized.

In the context of this disclosure, the invention refers to any type of established sealing of the atmospheric-, outboard-, internal, non-product exposed parts of mechanical shaft seals of the single type with the purpose of rinsing, cleaning, purging, sterilizing, sanitizing or any other similar processes by the usage of intermittently sealing elements fitted in the mechanical seal housing or integral with the equipment to be sealed, e.g., pump, mixer, or onto the shaft activated by the pressure of the rinse-, cleaning-, purging- , sterilizing- or sanitizing fluids (gaseous or liquid) during stand still (non-rotation) of the shaft. The intermittently sealing element assemblies as disclosed utilize a double modus function in that they are not intended to seal during rotation of the shaft ("non-sealing modus") and are sealing when pressure is applied onto the sealing element, i.e., "active sealing modus", preferably during stand still of the shaft. When the pressure is released, the sealing element assembly returns to an idle position or "non sealing modus" as the gap between the element and its counter face is re-established, and the shaft may rotate freely again with limited or no friction between the sealing element assembly and the housing or the shaft.

According to one aspect of the invention the sealing element assembly is a ring-shaped element and adapted to be movably arranged along a shaft and inside and in sealing contact with a housing and adapted to be slidably arranged within the housing such that the sealing element assembly is at a distance from the shaft. It is further adapted to be movably arranged between a non-sealing position where the sealing element assembly is adapted to be in sealing contact with the housing and at a distance from the shaft and a sealing position in which the sealing element assembly is adapted to be in sealing contact with the housing and at a distance from the shaft and in sealing contact with a flange on the shaft.

Upon pressurization, the ring-shaped element will move to a sealing position towards the flange. When the pressurization is stopped the ring-shaped element may return to a non-sealing modus in various ways. The sealing surface of the flange is perpendicular to or tapered up to ±5 degrees relative to a plane perpendicular to the rotational axis of the shaft. However, the sealing element assembly is never in contact with the shaft itself apart from said surface upon pressurization.

According to an alternative aspect of the present disclosure, the sealing element assembly further comprises a ring-shaped element adapted to be movably arranged in an axial direction in the housing and on the shaft. The resilient element is a seal and arranged on a surface of the ring-shaped element facing the ambient space and arranged to be in contact with a flange on the rotatable shaft upon pressurization of the enclosed space.

Upon pressurization, the ring-shaped element will move towards the flange on the shaft. When the pressurization is stopped, the resiliency of the seal may push back the ring-shaped element to a non-sealing modus.

According to one aspect of the present disclosure when the seal is arranged on the ring-shaped element, the seal is arranged in a circular recess on said surface.

According to another aspect of the present disclosure, the sealing element assembly further comprises a second seal arranged on the ring-shaped element and adapted to be in sealing contact with the housing. Since the ring-shaped element is movable relative both the housing and the shaft, a seal between the housing and the ring-shaped element improves the sealing.

In accordance with one embodiment of the present disclosure, the second seal is arranged in a circumferential recess of the ring-shaped element.

According to an alternative embodiment of the present disclosure, the sealing assembly comprises a second seal configured to fit in the housing and arranged to be in contact with the circumferential surface of the ring-shaped element.

According to yet an alternative embodiment of the present disclosure, the ring-shaped element has a radially protruding flange arranged to be in sealing contact with the housing and acting as a second seal.

In accordance with an aspect of the present disclosure, the second seal is arranged to bias the sealing element assembly towards a non-sealing position when the ring-shaped element is arranged in the housing.

According to a further aspect of the present disclosure, the ring-shaped element has a circumferential recess on the inner side adapted to face the shaft.

According to yet a further aspect of the present disclosure a seal is arranged in the recess facing the shaft. The seal could be shaped in various ways to assist the sealing element assembly to return to a non-sealing position after pressurization of the enclosed space.

In accordance with a further alternative embodiment of the present disclosure, the sealing element assembly is adapted to be arranged on the shaft and wherein the resilient part is a circumferential flange extending radially outwards and adapted to bend in an axial direction towards a sealing contact with a flange of the housing upon pressurization of the enclosed space.

In accordance with yet a further alternative embodiment of the present disclosure, the sealing element assembly is adapted to be arranged in the housing and wherein the resilient part is a circumferential flange extend radially inwards and adapted to bend in an axial direction towards a sealing contact with a flange on the shaft upon pressurization of the enclosed space.

According to yet another aspect of the invention, a method of cleaning the internal and non-product exposed parts of a mechanical shaft seal of single type having a sealing element assembly according to the above disclosure is provided, wherein the housing comprises an inlet opening and an outlet opening of an enclosed space comprising said internal and non-product exposed parts, comprising stopping rotation of the shaft, and pressurization of the enclosed space by forcing a cleaning medium into the enclosed space through the inlet opening with a flow such that the resilient part of the sealing element assembly seals the enclosed space.

It should be noted that it is advantageous to stop the rotation of the shaft prior to pressurizing. However, it is possible to pressurize the enclosed space without stopping the rotation of the shaft. Thus, according to a further aspect of the present disclosure, a method of cleaning the internal and non-product exposed parts of a mechanical shaft seal of single type having a sealing element assembly according to the above disclosure is provided, wherein the housing comprises an inlet opening and an outlet opening of an enclosed space comprising said internal and non-product exposed parts, comprising pressurization of the enclosed space by forcing a cleaning medium into the enclosed space through the inlet opening with a flow such that the resilient part of the sealing element assembly seals the enclosed space. According to a preferred aspect of this method, the rotational speed of the shaft during the pressurization is decreased and more preferred is to stop the rotation of the shaft entirely prior to pressurization.

It should be emphasized that the term "comprises/comprising" when used in this specification is taken to specify the presence of stated features, integers, steps or components but does not preclude the presence or addition of one or more other features, integers, steps, components or groups thereof.

Further features of, and advantages with, the present invention will become apparent when studying the appended claims and the following description. The skilled person realize that different features of the present invention may be combined to create embodiments other than those described in the following, without departing from the scope of the present invention.

### BRIEF DESCRIPTION OF THE DRAWINGS

The above, as well as additional objects, features and advantages of the present invention, will be better understood through the following illustrative and non-limiting detailed description of exemplary embodiments of the present invention, wherein:
Figure 1 is a partial cross-sectional view of a sealing element assembly according to one embodiment of the present disclosure arranged in a single type mechanical shaft seal assembly,
Figure 2 is a partial cross-sectional view of a sealing element assembly according to a further embodiment of the present disclosure arranged in a single type mechanical shaft seal assembly,
Figure 3 is a partial cross-sectional view of a sealing element assembly according to yet a further embodiment of the present disclosure arranged in a single type mechanical shaft seal assembly,
Figure 4 is a partial cross-sectional view of a sealing element assembly according to an alternative embodiment of the present disclosure arranged in a single type mechanical shaft seal assembly,
Figure 5 is a partial cross-sectional view of a sealing element assembly according to another embodiment of the present disclosure arranged in a single type mechanical shaft seal assembly,
Figure 6 is a partial cross-sectional view of a sealing element assembly according to yet another embodiment of the present disclosure arranged in a single type mechanical shaft seal assembly,
Figure 7 is a partial cross-sectional view of a sealing element assembly according to a further embodiment of the present disclosure arranged in a single type mechanical shaft seal assembly, and
Figure 8 is variant of the sealing element assembly shown in figure 7.

### DETAILED DESCRIPTION OF EXAMPLE EMBODIMENTS OF THE INVENTION

The present invention will now be described more fully hereinafter with reference to the accompanying drawings, in which exemplary embodiments of the invention are shown. The invention may, however, be embodied in many different forms and should not be construed as limited to the embodiments set forth herein; rather, these embodiments are provided for thoroughness and completeness. Like reference character refer to like elements throughout the description.

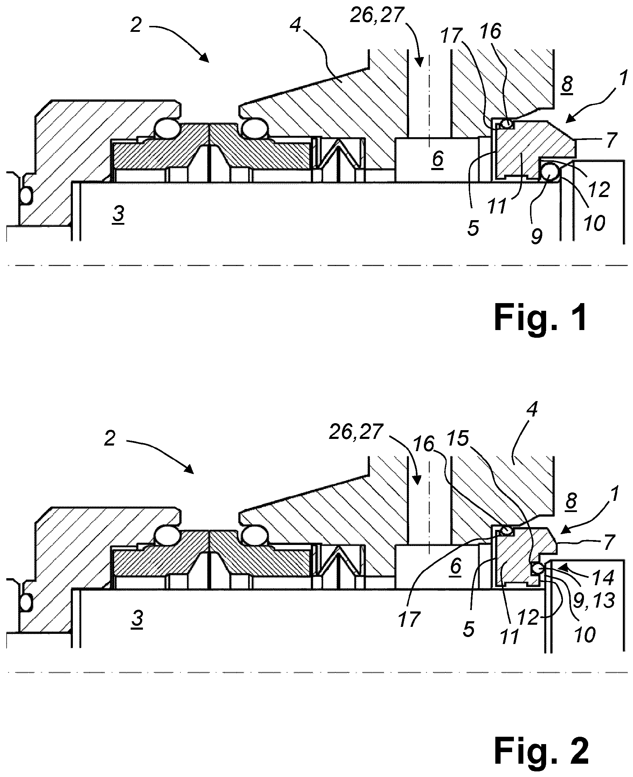

With reference to figure 1, a sealing element assembly 1 arranged in a single type mechanical shaft seal assembly 2 is shown. The sealing element assembly 1 is arranged between the circumference of a rotatable shaft 3 and a static housing 4 surrounding the shaft 3.

A first side 5 in an axial direction of the sealing element assembly 1 is facing an enclosed space 6 between the housing 4 and the shaft 3 and the opposite second side 7 of the sealing element assembly 1 is facing an ambient space 8. The sealing element assembly 1 further comprises a resilient part 9 that is arranged such that it biases the sealing element assembly 1 to a non-sealing position.

The sealing element assembly 1 is moveably arranged in an axial direction from the non-sealing position to the sealing position shown in figure 1 such that the sealing element assembly 1 constitutes a sealing between the rotatable shaft 3 and the housing 4 when the enclosed space 6 is pressurized.

The resilient part 9 is a seal, like an O-ring, arranged on the shaft 3. The sealing element assembly 1 further comprises a ring-shaped element 11 movably arranged in an axial direction in the housing 4 and on the shaft 3. The ring-shaped element 11 has an inner sealing surface 12 adapted to be pressed against the seal upon pressurization of the enclosed space 6.

As further can be seen, the sealing surface 12 is a plane perpendicular to the rotational axis of the shaft 3. An alternative is to have the surface tapered up to ±5 degrees relative a plane perpendicular to the rotational axis of the shaft.

Also, a second seal 16 is arranged on the ring-shaped element 11 and in sealing contact with the housing 4. The second seal 16 is arranged in a circumferential recess 17 of the ring-shaped element 11.

Turning to figure 2, an alternative embodiment of a sealing element assembly 1 arranged in a single type mechanical shaft seal assembly 2 is shown. The sealing element assembly 1 is arranged between the circumference of a rotatable shaft 3 and a static housing 4 surrounding the shaft 3.

A first side 5 in an axial direction of the sealing element assembly 1 is facing an enclosed space 6 between the housing 4 and the shaft 3 and the opposite second side 7 of the sealing element assembly 1 is facing an ambient space 8. The sealing element assembly 1 further comprises a resilient part 9 that is arranged such that it biases the sealing element assembly 1 to a non-sealing position.

The sealing element assembly 1 is moveably arranged in an axial direction from the non-sealing position to the sealing position shown in figure 1 such that the sealing element assembly 1 constitutes a sealing between the rotatable shaft 3 and the housing 4 when the enclosed space 6 is pressurized.

The sealing element assembly 1 further comprises a ring-shaped element 11 movably arranged in an axial direction in the housing 4 and on the shaft 3. The resilient element 9 is in this embodiment a seal 13 arranged on a surface 12 of the ring-shaped element 11 facing the ambient space 8 and in contact with a flange 14 on the rotatable shaft 3 upon pressurization of the enclosed space 8. The seal 13 is arranged in a circular recess 15 on said surface 12.

Also, a second seal 16 is arranged on the ring-shaped element 11 and in sealing contact with the housing 4. The second seal 16 is arranged in a circumferential recess 17 of the ring-shaped element 11.

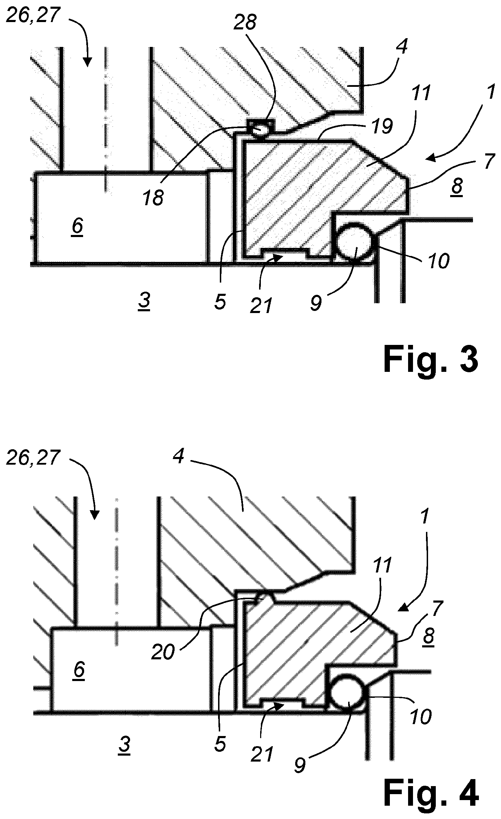

In figure 3, an enlarged view of a further alternative embodiment of sealing element assembly 1 arranged in a single type mechanical shaft seal assembly 2 is shown. The sealing element assembly 1 is arranged between the circumference of a rotatable shaft 3 and a static housing 4 surrounding the shaft 3.

A first side 5 in an axial direction of the sealing element assembly 1 is facing an enclosed space 6 between the housing 4 and the shaft 3 and the opposite second side 7 of the sealing element assembly 1 is facing an ambient space 8. The sealing element assembly 1 further comprises a resilient part 9 that is arranged such that it biases the sealing element assembly 1 to a non-sealing position.

The sealing element assembly 1 is moveably arranged in an axial direction from the non-sealing position to the sealing position shown in figure 1 such that the sealing element assembly 1 constitutes a sealing between the rotatable shaft 3 and the housing 4 when the enclosed space 6 is pressurized.

The resilient part 9 is a seal, like an O-ring, arranged on the shaft 3. The sealing element assembly 1 further comprises a ring-shaped element 11 movably arranged in an axial direction in the housing 4 and on the shaft 3. The ring-shaped element 11 has an inner sealing surface 12 adapted to be pressed against the seal upon pressurization of the enclosed space 6.

As further can be seen, the sealing surface 12 is a plane perpendicular to the rotational axis of the shaft 3. An alternative is to have the surface tapered up to ±5 degrees relative a plane perpendicular to the rotational axis of the shaft.

Also, a second seal 18 is arranged in the housing 4 and in sealing contact with the circumferential surface 19 of the ring-shaped element 11. The second seal 18 is arranged in a circumferential recess 28 of the housing 4.

The ring-shaped element 11 has a circumferential recess 21 on the inner side facing the shaft 3.

Moving on to figure 4, an enlarged view of yet a further alternative embodiment of sealing element assembly 1 arranged in a single type mechanical shaft seal assembly 2 is shown. The sealing element assembly 1 is arranged between the circumference of a rotatable shaft 3 and a static housing 4 surrounding the shaft 3.

A first side 5 in an axial direction of the sealing element assembly 1 is facing an enclosed space 6 between the housing 4 and the shaft 3 and the opposite second side 7 of the sealing element assembly 1 is facing an ambient space 8. The sealing element assembly 1 further comprises a resilient part 9 that is arranged such that it biases the sealing element assembly 1 to a non-sealing position.

The sealing element assembly 1 is moveably arranged in an axial direction from the non-sealing position to the sealing position shown in figure 1 such that the sealing element assembly 1 constitutes a sealing between the rotatable shaft 3 and the housing 4 when the enclosed space 6 is pressurized.

The resilient part 9 is a seal, like an O-ring, arranged on the shaft 3. The sealing element assembly 1 further comprises a ring-shaped element 11 movably arranged in an axial direction in the housing 4 and on the shaft 3. The ring-shaped element 11 has an inner sealing surface 12 adapted to be pressed against the seal upon pressurization of the enclosed space 6.

As further can be seen, the sealing surface 12 is a plane perpendicular to the rotational axis of the shaft 3. An alternative is to have the surface tapered up to ±5 degrees relative a plane perpendicular to the rotational axis of the shaft.

Also, the ring-shaped element 11 has a radially protruding flange 20 arranged in sealing contact with the housing 4 and acting as a second seal.

The ring-shaped element 11 has a circumferential recess 21 on the inner side facing the shaft 3.

During normal operation when the shaft 3 is rotating, the sealing element assembly 1 in the shape of a ring (split or solid) is in a non-sealing modus (so called idling) with a free clearance to the resilient element or seal 9 in the shape of an O-ring, quad-ring or any other type which is either positioned onto the shaft 3 directly and axially supported through a step in the shaft 3 or positioned onto and axially supported by a to the shaft attached separate part or any combination thereof or the seal may be positioned in a groove in the sealing element assembly 1 thus moving with the sealing element assembly 1.

The sealing function of the sealing element assembly 1 is only activated upon pressurization by water, compressed air, steam or other gaseous or liquid fluids of the enclosed space 6. Whilst exposed to pressure, a net resulting force in the axial direction acting on to the inner vertical plane 5 of the sealing element assembly 1 is established through hydraulic balancing of the sealing element assembly 1 and brings and maintains the sealing element assembly 1 through a translative movement in a position of active sealing onto the resilient element 9 which is sealing through axial deformation or alternatively deforming the integrated seal 13 as it reaches the counter face and establishes an active sealing function.

The sealing element assembly 1 together with the resilient element 9 and radially sealing seal 16, 18, 20 in the shape of an O-ring, quad-ring or any other type, will maintain active sealing whilst pressure is maintained. When the pressure is released, the elasticity of the resilient element 9 brings the sealing element assembly 1 back into a "non-sealing modus" as the gap between the sealing element assembly 1 and the resilient element 9 or the with the sealing element assembly integrated seal 9, 13 and its counter face is re-established and the shaft 3 may rotate freely again.

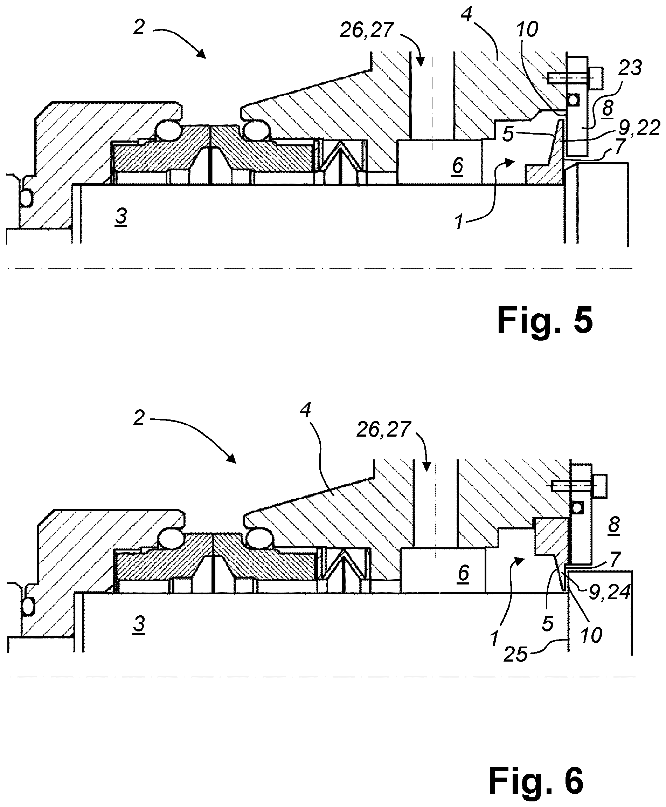

A further embodiment of a sealing element assembly 1 is shown in figure 5. A sealing element assembly 1 arranged in a single type mechanical shaft seal assembly 2 is shown. The sealing element assembly 1 is arranged between the circumference of a rotatable shaft 3 and a static housing 4 surrounding the shaft 3.

A first side 5 in an axial direction of the sealing element assembly 1 is facing an enclosed space 6 between the housing 4 and the shaft 3 and the opposite second side 7 of the sealing element assembly 1 is facing an ambient space 8. The sealing element assembly 1 further comprises a resilient part 9 that is arranged such that it biases the sealing element assembly 1 to a non-sealing position.

The sealing element assembly 1 is moveably arranged in an axial direction from the non-sealing position to the sealing position shown in figure 1 such that the sealing element assembly 1 constitutes a sealing between the rotatable shaft 3 and the housing 4 when the enclosed space 6 is pressurized. The sealing element assembly 1 is arranged on the shaft 3 and the resilient part 9 is a circumferential flange 22 extending radially outwards and adapted to bend in an axial direction towards a sealing contact with the flange 23 of the housing 4 upon pressurization of the enclosed space 6. In figure 5, the sealing element assembly 1 is shown in a non-sealing position.

During normal operation when the shaft 3 is rotating, the sealing element assembly 1 which is attached to the shaft 3 and rotates with the shaft 3 and is sealed to the shaft 3 either with a separate secondary seal or through the properties of the design material itself, is in a non-sealing modus (so called idling) with a free clearance to its counter face which is either integral with the housing 4 or with a separately to the housing 4 attached and statically sealed part 23.

The sealing function of the sealing element assembly 1 is only activated upon pressurization by water, compressed air, steam or other gaseous or liquid fluids of the seal interior. Whilst exposed to pressure, a net resulting force in the axial direction deforms the resilient element 9 so that the upper/outer part 22 bends to a closing position onto its counter face and in this way establishes an acitve sealing function for the duration of the pressurization. Upon pressure release, the elasticity of the upper/outer part 22 will bring back the upper part 22 of the device into a "non-sealing modus" as the gap between the sealing element assembly 1 and its counter face is re-established and the shaft 2 may rotate freely again.

Figure 6 shows an alternative embodiment to that shown in figure 5. The sealing element assembly 1 is instead arranged in the housing 4 and the resilient part 9 is a circumferential flange 24 extending radially inwards and adapted to bend in an axial direction towards a sealing contact with the flange 25 on the shaft 3 upon pressurization of the enclosed space 6. Also, the sealing element assembly 1 is shown in a non-sealing position.

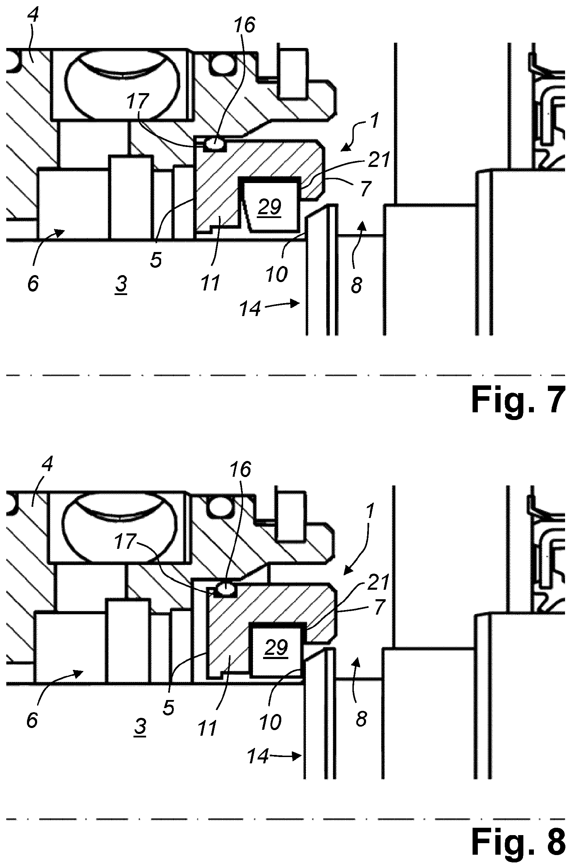

Turning to figures 7 and 8, a sealing element assembly 1 in a single type mechanical shaft seal assembly 2 is shown. The sealing element assembly 1 is arranged between the circumference of a rotatable shaft 3 and a static housing 4 surrounding the shaft 3. A first side 5 in an axial direction of the sealing element assembly 1 faces an enclosed space 6 between the housing 4 and the shaft 3 and the opposite second side 7 of the sealing element assembly 1 faces an ambient space 8. The sealing element assembly 1 is partly moveably arranged in an axial direction from a non-sealing position, see figure 7, to a sealing position, see figure 8. The sealing element assembly 1 in the non-sealing position is arranged at distance from a surface 10 of a plane that is transversal or tapered up to ±5 degrees to an axis of the shaft 3. In the sealing position, the sealing element assembly 1 seals against said surface 10 such that the sealing element assembly 1 constitutes a sealing between the rotatable shaft 3 and the housing 4 when the enclosed space 6 is pressurized.

The sealing element assembly 1 is a ring-shaped element 11 movably arranged along the shaft 3 and inside and in sealing contact with the housing 4 and further adapted to be slidably arranged within the housing 4 such that the sealing element assembly 1 is at a distance from the shaft. It is movably arranged between a non-sealing position where the sealing element assembly 1 is in sealing contact with the housing 4, figure 7, and at a distance from the shaft 3 and a sealing position, figure 8, in which the sealing element assembly 1 is in sealing contact with the housing 4 and at a distance from the shaft 3 but in sealing contact with a flange 14 on the shaft 3.

As further can be seen in figures 7 and 8, the ring-shaped element 11 has a circumferential recess 21 on the inner side adapted to face the shaft 3. A seal 29 is arranged in the recess 21. In figure 7, the seal 29 has a wedged side such that the cross section of the seal is a truncated cone. Upon pressurization, the sealing element assembly 1 moves to a sealing position and the specific shape of the seal 29 in figure 7 offers a spring like function such that when the pressurization is stopped, the seal 29 will assist in moving the sealing element assembly 1 back to the non-sealing position as shown in figure 7.

The sealing element assembly 1 with the ring-shaped element 11 will start in a non-sealing position and move to a sealing position when the enclosed space is pressurized. When pressurization stops, the fluid exiting the enclosed space 6 may cause a sub pressure in the enclosed space 6 such that the sealing element assembly will be drawn or sucked back to the non-sealing position.

During normal operation when the shaft 3 is rotating, the sealing element assembly 1 which is attached to housing 4 and is sealed to the housing 4 either with a separate secondary seal or through the properties of the design material itself, is in a non-sealing modus (so called idling) with a free clearance to its counter face which is either integral with the shaft 3 or with a separately to the shaft 3 attached and statically sealed part 24.

The sealing function of the sealing element assembly 1 is only activated upon pressurization by water, compressed air, steam or other gaseous or liquid fluids of the seal interior. Whilst exposed to pressure, a net resulting force in the axial direction deforms the sealing element assembly 1 so that the lower/inner part 24 of the sealing element assembly 1 bends to a closing position onto its counter face at the shaft 3 and in this way establishes an active sealing function for the duration of the pressurization. Upon pressure release, the elasticity of the sealing element assembly 1 will bring back the lower/inner part 24 of the sealing element assembly into a "non-sealing modus" as the gap between the sealing element assembly 1 and its counter face at the shaft 3 is re-established and the shaft 3 may rotate freely again

A method of cleaning the internal and non-product exposed parts of a mechanical shaft seal 2 of single type having a sealing element assembly 1 as disclosed above and wherein the housing 4 comprises an inlet opening 26 and an outlet opening 27 of an enclosed space 6 comprising said internal and non-product exposed parts, comprises pressurization of the enclosed space 6 by forcing a cleaning medium into the enclosed space 6 through the inlet opening 26 with a flow such that the resilient part 9 of the sealing element assembly 1 seals the enclosed space 6. More preferred is to decrease the rotational speed of the shaft 3, and most preferred is stopping rotation of the shaft 3 entirely, prior to pressurization.

The inlet opening 26 has preferably a larger cross section area than the cross section are of the outlet opening 27 such that the pressure in the enclosed space 6 more efficiently increases when a flow of the rinse-, cleaning-, purging- , sterilizing- or sanitizing fluids (gaseous or liquid) are pumped in through the inlet opening 26.

As used herein, the singular forms "a", "an" and "the" are intended to include the plural forms as well, unless expressly stated otherwise. It will be further understood that the terms "includes," "comprises," "including" and/or "comprising," when used in this specification, specify the presence of stated features, integers, steps, operations, elements, and/or components, but do not preclude the presence or addition of one or more other features, integers, steps, operations, elements, components, and/or groups thereof. It will be understood that when an element is referred to as being "connected" or "coupled" to another element, it can be directly connected or coupled to the other element or intervening elements may be present. As used herein, the term "and/or" includes any and all combinations of one or more of the associated listed items.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Examples of the disclosure include the following examples:
Example 1: A sealing element assembly (1) for a single type mechanical shaft seal assembly (2), the sealing element assembly (1) adapted to be arranged between the circumference of a rotatable shaft (3) and a static housing (4) surrounding the shaft (3),
   **characterized in**
   that a first side (5) in an axial direction of the sealing element assembly (1) is adapted to face an enclosed space (6) between the housing (4) and the shaft (3) and the opposite second side (7) of the sealing element assembly (1) is adapted to face an ambient space (8), wherein the sealing element assembly (1) is adapted to be at least partly moveably arranged in an axial direction from a non-sealing position to a sealing position, wherein the sealing element assembly (1) in the non-sealing position is adapted to be arranged at distance from a surface (10) of a plane that is transversal or tapered up to ±5 degrees to an axis of the shaft (3), wherein in the sealing position, the sealing element assembly (1) is arranged to seal against said surface (10) such that the sealing element assembly (1) constitutes a sealing between the rotatable shaft (3) and the housing (4) when the enclosed space (6) is pressurized.
Example 2: The sealing element assembly (1) according to Example 1, wherein the sealing element assembly (1) is a ring-shaped element (11) and adapted to be movably arranged along a shaft (3) and inside and in sealing contact with a housing (4) and adapted to be slidably arranged within the housing (4) such that the sealing element assembly (1) is at a distance from the shaft, and movably arranged between a non-sealing position where the sealing element assembly (1) is adapted to be in sealing contact with the housing (4) and at a distance from the shaft (3) and a sealing position in which the sealing element assembly (1) is adapted to be in sealing contact with the housing (4) and at a distance from the shaft (3) and in sealing contact with a flange (14) on the shaft (3).
Example 3: The sealing element assembly (1) according to Example 2, wherein the ring-shaped element (11) comprises a resilient element (9) as a seal (13) and arranged on a surface (12) of the ring-shaped element (11) facing said transversal surface (10) of the flange (14) and the ambient space (8) and arranged to be in contact with the flange (14) of the rotatable shaft (3) upon pressurization of the enclosed space (8).
Example 4: The sealing element assembly (1) according to Example 3, wherein the seal (13) is arranged in a circular recess (15) on said surface (12) of the ring-shaped element (11).
Example 5: The sealing element assembly (1) according to any of the Examples 2-4, further comprising a second seal (16) arranged on the ring-shaped element (11) and adapted to be in sealing contact with the housing (4).
Example 6: The sealing element assembly (1) according to Example 5, wherein the second seal (16) is arranged in a circumferential recess (17) of the ring-shaped element (11).
Example 7: The sealing element assembly (1) according to any of the Examples 2-4, comprising a second seal (18) configured to fit in the housing (4) and arranged to be in contact with the circumferential surface (19) of the ring-shaped element (11).
Example 8: The sealing element assembly (1) according to any of the Examples 2-4, wherein the ring-shaped element (11) has a radially protruding flange (20) arranged to be in sealing contact with the housing (4) and adapted to act as a second seal.
Example 9: The sealing element assembly (1) according to any of the Examples 3 to 7, wherein the second seal is arranged to bias the sealing element assembly towards a non-sealing position when the ring-shaped element is arranged in the housing.
Example 10: The sealing element assembly (1) according to any of the Examples 2-9, wherein the ring-shaped element (11) has a circumferential recess (21) on the inner side adapted to face the shaft (3).
Example 11: The sealing element assembly (1) according to Example 10, wherein a seal (29) is arranged in the recess (21).
Example 12: The sealing element assembly (1) according to Example 1, wherein the sealing element assembly (1) is adapted to be arranged on the shaft (3) and wherein a resilient part (9) on the sealing element assembly is a circumferential flange (22) extending radially outwards and adapted to bend in an axial direction towards a sealing contact with a flange (23) of the housing (4) upon pressurization of the enclosed space (6).
Example 13: The sealing element assembly (1) according to Example 1, wherein the sealing element assembly (1) is adapted to be arranged in the housing (4) and wherein a resilient part (9) is a circumferential flange (24) extend radially inwards and adapted to bend in an axial direction towards a sealing contact with a flange (25) on the shaft (3) upon pressurization of the enclosed space (6).
Example 14: A method of cleaning the internal and non-product exposed parts of a mechanical shaft seal (2) of single type having a sealing element assembly (1) according to any of the preceding claims and wherein the housing (4) comprises an inlet opening (26) and an outlet opening (27) of an enclosed space (6) comprising said internal and non-product exposed parts, comprising:
   one of stopping rotation of the shaft (3), decreasing rotational speed of the shaft (3), and maintaining rotational speed of the shaft (3), and
   pressurization of the enclosed space (6) by forcing a cleaning medium into the enclosed space (6) through the inlet opening (26) with a flow such that the resilient part (9) of the sealing element assembly (1) seals the enclosed space (6).
Example 15: A single type mechanical shaft seal assembly (2) comprising a sealing element assembly (1) according to any of the Examples 1-13.

## Claims

1. A sealing element assembly (1) for a single type mechanical shaft seal assembly (2), the sealing element assembly (1) adapted to be arranged on a rotatable shaft (3) and cooperate with a static housing (4), wherein
- a resilient part (9) of the sealing element assembly (1) is a circumferential flange (22) extending radially outward from the sealing element assembly (1),
- the flange (22) is adapted to bend in an axial direction towards a sealing contact with a flange (23) of the housing (4) upon pressurization of an enclosed space (6) located between the shaft (3) and the housing (4),
- the flange (22) returns to a non-sealing position when pressure is released.

2. The sealing element assembly according to claim 1, wherein the sealing element assembly (1) is adapted to rotate with the shaft (3).

3. A sealing element assembly (1) for a single type mechanical shaft seal assembly (2), the sealing element assembly (1) adapted to be arranged in a static housing (4) and cooperate with a rotatable shaft (3), **characterized in that**:
- a resilient part (9) of the sealing element assembly (1) is a circumferential flange (24) extending radially inward from the sealing element assembly (1),
- the flange (24) is adapted to bend in an axial direction towards a sealing contact with a flange (25) on the shaft (3) upon pressurization of an enclosed space (6) between the shaft and the housing,
- the flange (24) returns to a non-sealing position when pressure is released.

4. The sealing element assembly according to claim 3, wherein the sealing element assembly (1) is adapted to remain stationary relative to the housing (4).

5. The sealing element assembly according to any one of the preceding claims, wherein the sealing element is integrally formed from an elastomeric or thermoplastic elastomer material.

6. The sealing element assembly according to any one of the preceding claims, wherein the sealing contact is established by deformation of the flange (22, 24) without axial displacement of the sealing element assembly (1).

7. The sealing element assembly according to any one of the preceding claims, wherein the flange (22, 24) is shaped to flex under a predetermined threshold pressure.

8. The sealing element assembly according to any one of the preceding claims, wherein the shaft seal assembly comprises an inlet (26) and an outlet (27) for supplying and discharging a cleaning fluid.

9. A method of cleaning internal and non-product exposed parts of a mechanical shaft seal assembly (2) of single type, comprising:
- providing a sealing element assembly (1) including a resilient circumferential flange (22; 24) arranged to extend radially outward or inward,
- pressurizing an enclosed space (6) between a rotatable shaft (3) and a housing (4) such that the flange (22; 24) bends axially into sealing contact with a counter-flange (23; 25),
- maintaining the sealing during the cleaning operation, and
- releasing the pressure such that the flange (22; 24) elastically returns to a non-sealing position due to its inherent resilience.

10. The method according to claim 9, wherein the sealing element assembly (1) is arranged on the shaft (3) and the flange (22) seals against a housing flange (23).

11. The method according to claim 9, wherein the sealing element assembly (1) is arranged in the housing (4) and the flange (24) seals against a shaft flange (25).

12. The method according to any one of claims 9 to 11, wherein the sealing element (1) is formed from an elastic material without a separate spring or O-ring.

13. The method according to any one of claims 9 to 12, wherein the pressurization is applied using a cleaning medium selected from water, steam, or compressed air.

14. The method according to any one of claims 9 to 13, wherein the pressurization is applied in one or more pressure pulses to cyclically actuate the sealing flange.

15. The method according to any one of claims 9 to 14, wherein the return to non-sealing position is supported by a sub-pressure created by fluid exiting the enclosed space (6).
